# EUROPEAN PATENT APPLICATION

(11) **EP 3 806 483 A1**
(43) Date of publication of application: **14.04.2021**
(21) Application number: 20200461.0
(22) Date of filing: 07.10.2020
(51) Int. Cl.: H04Q 9/00, H04W 84/18

(54) **METHOD OF MONITORING REGIONAL AREAL, TREE OR LINEAR INFRASTRUCTURE AND AN INSTALLMENT OF A MONITORING SYSTEM**

(30) Priority: 09.10.2019 SK 1082019; 09.10.2019 SK 1502019
(71) Applicant: Mobility & Big Data, s. r. o., 81104 Bratislava 1 (SK)
(72) Inventor:
(74) Representative: Jeck, Anton

(57) **Abstract**

Installment of monitoring regional areal, tree or linear infrastructure is solved in such a way that it consists of an autonomous proprietary network with a system of concentrators (K) and a multilevel system of sensory devices (S) in such a way that the first level of sensory devices (S) is connected to each concentrator (K). Thereby, each higher level sensory device (S) is interconnected with the nearest one degree lower level sensory devices (S) and with the one degree higher level sensory devices (S). Firmware is contained in the hardware facilities of each sensory device (S) which controls the collection of sensory data, but also communication. Concentrators (K) are connected to data storage via a data network.

## Description

### Technical field

The invention relates to a method of monitoring regional areal, tree or linear infrastructure and to installment of a monitoring system, where the term "regional infrastructure" refers to a city, municipality, hiking trail, river basin and other geographical areas, whether areal or linear. The monitoring system with SYNCiton sensory devices is designed to collect and transmit any messages within a defined region. The main area of application is the Smart City project with the collection and transmission of sensory data. The invention falls within the field of monitoring and data transmission.

### Background of the invention

A standard approach to monitoring is known from the prior art, which considers a small number of sensors within the infrastructure, of the order of tens to thousands. This approach does not allow enough data to be collected and the current demand for modern applications is not met. In addition, the technologies used are expensive, both for procurement and for operation, especially in terms of energy requirements.

GSM networks are primarily built for permanent connection and continuous voice or data flow. These solutions are not suitable or applicable for the need of battery power and if so only in the span of few hours to days. Their energy intensity is up to 1000 times higher than the energy intensity of IoT devices.

These networks also cannot be used in an environment where the infrastructure is not covered by mobile operators, such as hiking trails or river basins.

GSM networks are also tied to a commercial operator and associated fees. When using thousands to tens of thousands of sensors, the operating costs outweigh the value of the solution.

Technologies of the SigFox, LoRa type and the like are not suitable for this purpose. They can transmit extremely little data in very sparse sending cycles and cannot build their own network infrastructure. They are designated mainly for data collection, for example from electricity meters or gas meters, as in such applications the information is needed only on a daily or even monthly basis.

MASH networks based on bluetooth, zigbee and other technologies work only in cases where these devices are constantly energized, they are subject to extreme mutual interference and the range of such a network in the number of jumps can be of the order of only a few units, but certainly not tens, otherwise such a network becomes dysfunctional in terms of practical use.

The absence of effective fast, economical and efficient networks with the sensory devices has led to an effort to design such a network that would meet the above stated requirements. The effort has resulted in an original method of monitoring regional areal, tree or linear infrastructure and to the installment of a monitoring system, further described in this invention.

### Summary of the invention

The above stated shortcomings are eliminated by the installment of the monitoring system according to the invention and enable the monitoring of the regional areal, tree or linear infrastructure. The essence of the invention lies in the fact that the installment of the monitoring system consists of several technological layers, each of which is precisely defined in engineering so that these layers can be open to different, whether hardware or software manufacturers and customers. The core of the monitoring system is the SYNCiton sensory device, which is a communication system enabling the autonomous connection of SYN Citon UNIT sensory devices to large self-organizing SYNCiton NETWORK networks. The core of the system consists of individual precisely defined autonomous sensory devices predominantly on SoC platforms. The hardware level is defined mainly in terms of enabling the hardware level to connect to the communication network under a unified protocol. The whole hardware solution must comply with all legislative regulations related to electromagnetic radiation. Software (firmware) is uploaded directly to the hardware part. The firmware must strictly adhere to the defined communication protocol, including all security features; otherwise the communication network will automatically exclude it and will not accept and transmit its data. The communication protocol is created in such a way that the control information optimally occupies only 0.5% of the communication, the remaining is used for useful data. One transmission and receipt cycle of the device will last from 10ms to 100ms.

The installment of the monitoring of the regional areal, tree or linear infrastructure consists of an autonomous proprietary network with a system of concentrators and a multilevel system of sensory devices in such a way that the first level of sensory devices is connected to each concentrator. The distance between adjacent sensory devices depends on the hardware used and ranges of the order of 50m to 1,000 m, and for this distance the parameter is one of the communication standards Bluetooth, WiFi, Zigbee, LoRa, Sigfox, RFC or other from which data can be transmitted. The total size of the network with the sensory devices does not depend on the hardware used and ranges of the order of 50m to 100,000m, and for this distance the first parameter is one of the communication standards Bluetooth, WiFi, Zigbee, LoRa, Sigfox, RFC and the second parameter is at the same time the distance from the concentrator with the number of L-level jumps from which data can be transmitted and is limited only by the number of sensory devices in the network. Each sensory device is interconnected with the nearest one or with more sensory devices of lower or higher level by one degree. The sensory devices are universal for measuring not only one variable: temperature, humidity, pressure, noise, CO₂, dustiness, magnetic field, vibrations, but they are at the same time communication nodes of the communication network in asymmetric pulse waves. The concentrators are connected to a data storage via data network to transmit the data to the Cloud. In the whole infrastructure, there is only one concentrator per 1000 sensors. The concentrator is not a sensory network control device. The network is autonomous and the concentrator only transmits data to the Internet. If another concentrator connects to the network, the network can autonomously integrate it into the infrastructure and use it for data transmission. The concentrator must comply with precise security rules otherwise it will be rejected by the network. The data storage preserves all data securely stored for further processing. Its function is to store, analyze, encode and back up data. The data storage also includes big data analysis used by the application layer. The data storage has a defined communication interface, by means of which concentrators and the application layer are connected to it. The hardware facilities of users with an active web or mobile application are connected to the data storage via the data network, whereby hardware facilities of users have connections to individual sensory devices which are within the reach and have security authorization. In an active application, data is downloaded from the data storage and provided to the presentation layer of function and event. The presentation layer enables interaction of users with the whole platform. The presentation layer enables the interaction of end users, but also integrators in creating and defining sensory networks. The presentation layer will work autonomously on mobile devices such as phones, tablets and notebooks as well as integrated into other solutions in the form of web applications.

If the SYNCiton sensory device is battery powered, it sleeps most of the time. However, it must be woken up exactly in defined time in order to fulfill also the role of network infrastructure. The devices autonomously detect the communication path to the concentrators. The whole communication may be encrypted with security keys so that it cannot be tampered and possible attacks cannot disturb the whole infrastructure. The concentrator is responsible for the final communication to the Internet network.

Sensory devices are autonomously integrated into the communication system, based only on a single security key. No further configuration is required and it does not matter to which place of infrastructure the sensor is connected and which types of scanned data it has. The key serves only to accept / authorize the inclusion of the sensory device and to encrypt the data. The sensory device listens to the surrounding communication at a defined time and, based on it, is autonomously integrated into the communication infrastructure. If the device stops working, other devices will recognize it and create alternate communication paths.

The method of monitoring regional areal, tree or linear infrastructure is based on the fact that in an autonomous proprietary network, the autonomous reconfiguration, synchronization, communication and data transmission between sensory devices of regional infrastructure monitoring takes place in asymmetric pulse communication waves in such a way that in one wave pass, data from any sensory device transmits via the whole autonomous proprietary network to the nearest concentrator in one wave pass, whereby the number of pulse waves necessary for the data transmission from the concentrator to the sensory device equals to its jump distance from the concentrator, whereby it consists of steps where:
- In the first step, the sensory device asks for the security key if it does not already have it and subsequently waits until it detects all the time windows of communication, subsequently, when it has the necessary data, it sleeps and wakes up exactly after time T0;
- From time T0, the sensory device listens to sensory devices from L+1 layer for time T1, which are one level further from the concentrator than this sensory device itself, whereby from each sensory device it first verifies the security code and if it is correct it stores the data in memory to transmit it in the next step;
- It subsequently transmits data to the L+1 layer for the time T2A, which is mainly data propagating from the concentrator to the edges of the network;
- In the next step, the transmission to the L-1 layer takes place for the time T2B, when the own data as well as the data from the memory from other sensory devices are being transmitted;
- In the penultimate step, the sensory device listens to the data from the L-1 layer for the time T3, which will be transmitted to the L+1 layer in the next step;
- After this step, the sensory device sleeps for a time T0 in order to save battery power.

The essence of the method of monitoring regional areal, tree or linear infrastructure also lies in the fact that the devices included in the proprietary network communicate on communication standards Bluetooth, WiFi, Zigbee, LoRa, Sigfox, RFC or also newly originated protocols in such a way that devices which are in adjacent layers L and L-1 use the same communication protocol.

The advantages of the method of monitoring regional areal, tree or linear infrastructure and the installment of a monitoring system according to the invention are apparent based on its effects by which it manifests itself externally. The effects of the present invention are based on the fact that the sensors have extremely low power consumption of the order of 0.5W to 3W annually, whereby they serve at the same time as nodes of the communication infrastructure and at the same time as monitoring points. The sensors behave like beacons. The sensors create an autonomous proprietary network. The network can handle thousands of connected sensors per one concentrator. Millions of sensors can be connected to the network and for this purpose is the whole system designed to organize itself. The SYNCiton device is connected to the network by uploading a security clearance, and the SYNCiton device places in its position, while the network itself finds and connects the device. The network is functional if the sensors are between 50m to 100,000m apart from each other depending on the hardware used. The sensors are universally designed to be able to measure: temperature, humidity, sound, CO₂ and other gases levels, dustiness, magnetic field, vibrations and other. The sensors are powered by a small accumulator, or possibly extended by a solar cell, if required by the measured variable. The SYNCiton sensory device is connected to the network by uploading a security clearance, and the SYNCiton device places in its position, while the network itself finds and connects the device.

### Description of the drawings

The attached drawings show the features of the solution that are related to the design of the SYNCiton UNIT and SYNCiton Network device. Fig. 1 shows one embodiment of a SYNCiton communication network and its layer. Fig. 2 shows a second embodiment of a SYNCiton communication network and its layer. Fig. 3 shows the communication basis of SYNCiton devices and the sequence of steps of this communication. Fig. 4 shows a communication protocol.

### Examples of embodiment

It is to be understood that the individual embodiments of the invention are presented for illustration and not as a limitation of the technical solutions. Those skilled in the art will find out or be able to ascertain by using no more than routine experimentation many equivalents to specific embodiments of the invention. Such equivalents will also fall within the scope of the following claims.

For those skilled in the art, it cannot be a problem to optimally design the structure and select suitable materials, therefore these features have not been solved in detail.

### Example 1

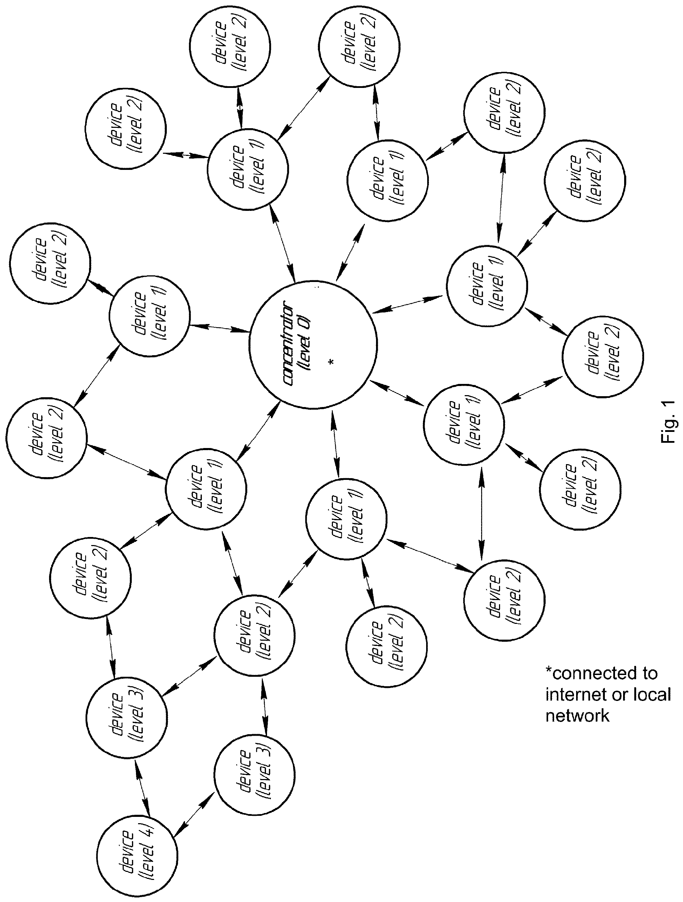

In this example of a concrete embodiment of the invention, an installment of the monitoring of the regional areal infrastructure shown in Fig. 1 is described. It consists of an autonomous proprietary network with a system of concentrators K and a multilevel system of sensory devices S in such a way that the first level of sensory devices S is connected to each concentrator K. Each higher level sensory device S is interconnected with the nearest one degree lower level sensory devices S and with the one degree higher level sensory devices S. Firmware is contained in the hardware facilities of each sensory device S. The concentrators K are connected to the data storage via a data network. The distance between the sensory devices S is between 50m to 1,000m depending on the hardware used. The sensory devices S are universal for measuring temperature, pressure, humidity, noise, CO₂, dustiness, magnetic field, vibrations and other variables and parameters and are at the same time communication nodes of the communication network in asymmetric pulse waves. The hardware facilities of users with an active web or mobile application are connected to the data storage via the data network, whereby hardware facilities of users have connections to individual sensory devices S which are within the reach and have security authorization.

By such installment, the areal region such as a city, a production plant premises, a parking lot, a stadium, or an office building can be monitored in a comprehensive way.

The sensors are intended to collect the data on physical variables such as temperature, humidity, pressure, noise, CO₂, dustiness, magnetic field, vibrations, or other, and at the same time also autonomously establish a communication network.

### Example 2

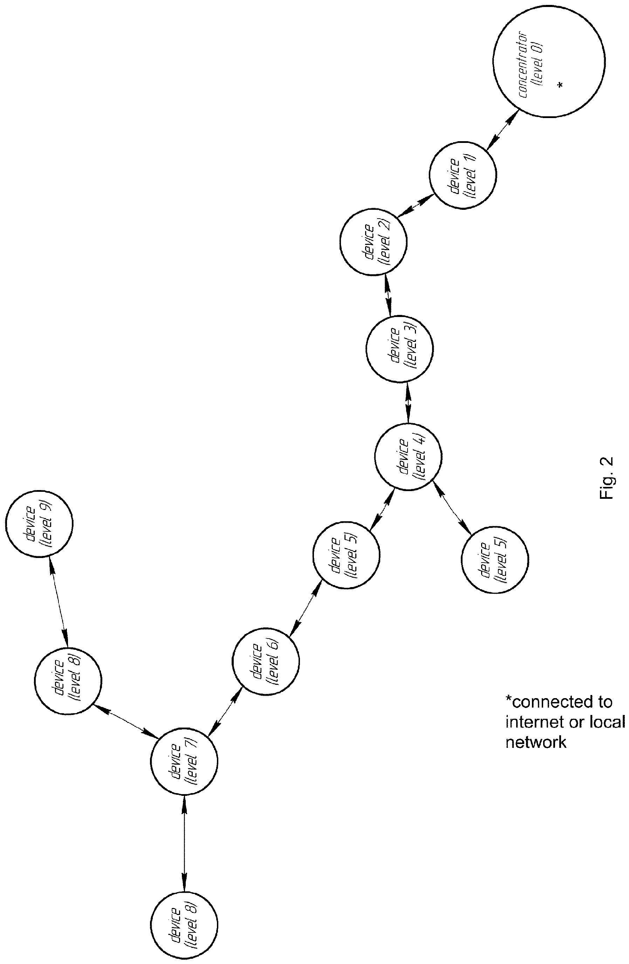

In this example of a concrete embodiment of the invention, an installment of the monitoring of the regional, tree or linear infrastructure shown in Fig. 2 is described. It consists of an autonomous proprietary network with a system of concentrators K and a multilevel system of sensory devices S in such a way that that the first level of sensory devices S is connected to each concentrator K. Each higher level sensory device S is interconnected with the nearest one degree lower level sensory devices S and with the one degree higher level sensory devices S. Firmware is contained in the hardware facilities of each sensory device S. The concentrators K are connected to data storage via a data network. The distance between the sensory devices S is between 50m to 1,000m depending on the hardware used. Sensory devices S are universal for measuring temperature, pressure, humidity, noise, CO₂, dustiness, magnetic field, vibrations and others and are at the same time communication nodes of the communication network in asymmetric pulse waves. The hardware facilities of users with an active web or mobile application are connected to the data storage via the data network, whereby hardware facilities of users have connections to individual sensory devices S which are within the reach and have security authorization.

By such installment, a linear or tree region such as hiking trails, river basins, road infrastructure, oil or gas pipelines, and electricity grids can be monitored in a comprehensive way.

The sensors are intended to collect data on physical variables such as temperature, humidity, pressure, noise, CO₂, dustiness, magnetic field, vibrations, or other, and at the same time also autonomously establish a communication network.

### Example 3

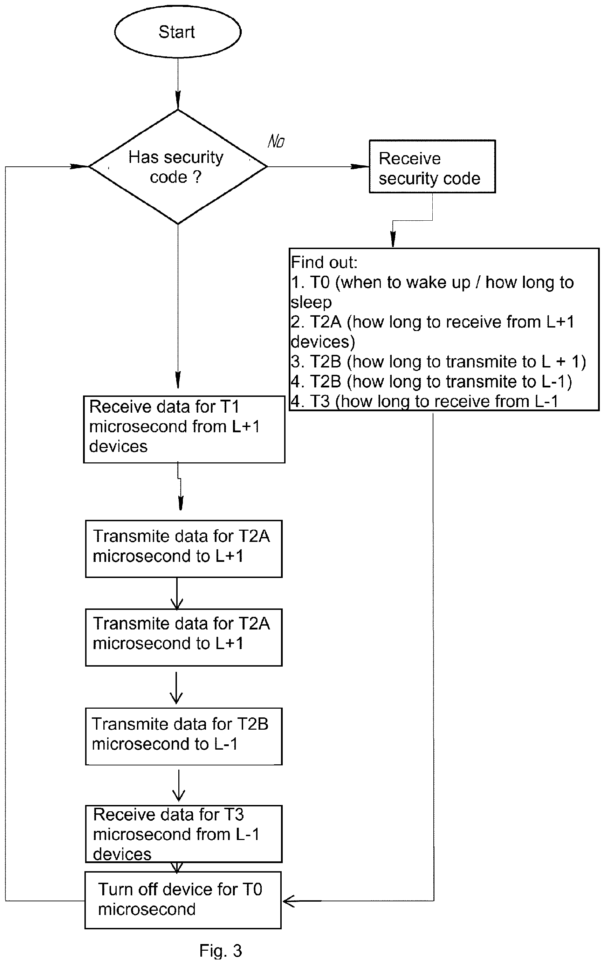

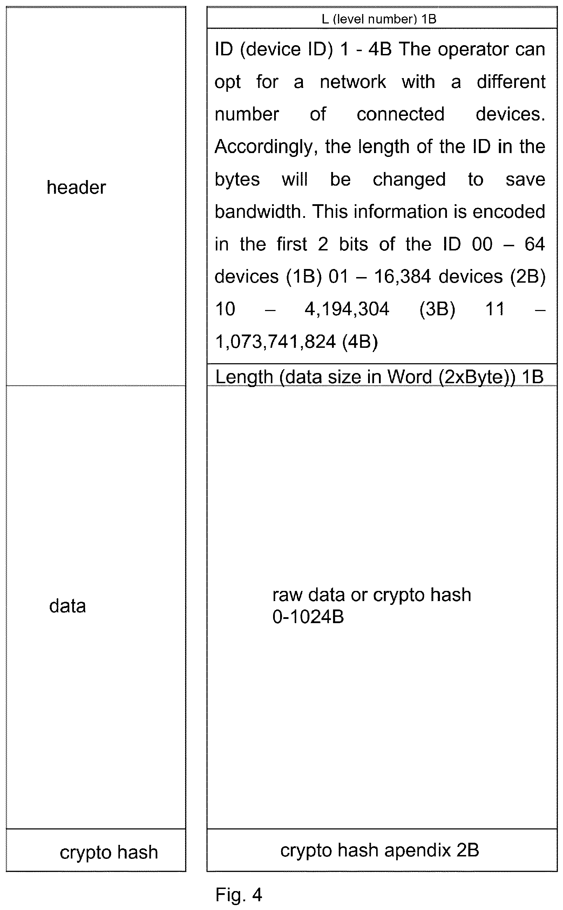

In this example of a concrete embodiment of the invention, the method of monitoring regional areal, tree or linear infrastructure shown in Fig. 3 with the support of the communication protocol shown in Fig. 4 is described. The method of monitoring regional areal, tree or linear infrastructure is solved in such a way that in an autonomous proprietary network, the autonomous reconfiguration, synchronization, communication and data transmission between sensory devices of regional infrastructure monitoring takes place in asymmetric pulse communication waves in such a way that in one wave pass, data from any sensory device transmits via the whole autonomous proprietary network to the nearest concentrator in one wave pass, whereby the number of pulse waves necessary for the data transmission from the concentrator to the sensory device equals to its jump distance from the concentrator, whereby it consists of steps where:
- In the first step, the sensory device asks for the security key if it does not already have it and subsequently waits until it detects all the time windows of communication, subsequently, when it has the necessary data, it sleeps and wakes up exactly after time T0;
- From time T0, the sensory device listens to sensory devices from L+1 layer for time T1, which are one level further from the concentrator than this sensory device itself, whereby from each sensory device it first verifies the security code and if it is correct it stores the data in memory to transmit it in the next step;
- It subsequently transmits data to the L+1 layer for the time T2A, which is mainly data propagating from the concentrator to the edges of the network;
- In the next step, the transmission to the L-1 layer takes place for the time T2B, when the own data as well as the data from the memory from other sensory devices are being transmitted;
- In the penultimate step, the sensory device listens to the data from the L-1 layer for the time T3, which will be transmitted to the L+1 layer in the next step;
- After this step, the sensory device sleeps for a time T0 in order to save battery power.

The devices included in the proprietary network communicate on communication standards Bluetooth, WiFi, Zigbee, LoRa, Sigfox, RFC or also newly originated protocols in such a way that devices which are in adjacent layers L and L-1 use the same communication protocol.

### Industrial usability

The method of monitoring regional infrastructure and the installment of a monitoring system according to the invention finds usability in Smart city projects, Smart Home collection of sensory data and loT, environment, environmental quality measurements, security, transport, Point of interest and tourism.

## Claims

1. Installment of monitoring regional areal, tree or linear infrastructure, **characterized in that** it consists of an autonomous proprietary network with a system of concentrators (K) and a multilevel system of sensory devices (S) in such a way that the first level of sensory devices (S) is connected to each concentrator (K), whereby each higher level sensory device (S) is interconnected with the nearest one degree lower level sensory devices (S) and with the one degree higher level sensory devices (S), whereby firmware for data collection control and concentrator communication control is contained in the hardware facilities of each sensory device (S) (K); concentrators (K) are connected to data storage via a data network.

2. Installment of monitoring regional areal, tree or linear infrastructure according to the claim 1, **characterized in that** the distance between the sensory devices (S) is between 50m to 1,000m and for this distance the parameter is one of the communication standards Bluetooth, WiFi, Zigbee, LoRa, Sigfox, RFC or other from which the data can be transmitted, whereby the total size of the network with the sensory devices does not depend on the hardware used and ranges of the order from 50m to 100,000m, and for this distance the first parameter is one of the communication standards Bluetooth, WiFi, Zigbee, LoRa, Sigfox, RFC and the second parameter is at the same time the distance from the concentrator with the number of L-level jumps from which data can be transmitted and is limited only by the number of sensory devices in the network.

3. Installment of monitoring regional areal, tree or linear infrastructure according to the claim 1, **characterized in that** the sensory devices (S) are universal for measuring not only one variable: temperature, humidity, air pressure, noise, CO₂, dustiness, magnetic field, vibrations and are at the same time communication nodes of the communication network in asymmetric pulse waves.

4. Installment of monitoring regional areal, tree or linear infrastructure according to the claim 1 to 3, **characterized in that** the hardware facilities of users with an active web or mobile application are connected to the data storage via the data network, whereby hardware facilities of users have connections to individual sensory devices (S) which are within the reach and have security authorization.

5. The method of monitoring regional areal, tree or linear infrastructure, **characterized in that** in an autonomous proprietary network, the autonomous reconfiguration, synchronization, communication and data transmission between sensory devices of regional infrastructure monitoring takes place in asymmetric pulse communication waves in such a way that in one wave pass, data from any sensory device transmits via the whole autonomous proprietary network to the nearest concentrator in one wave pass, whereby the number of pulse waves necessary for the data transmission from the concentrator to the sensory device equals to its jump distance from the concentrator, whereby it consists of steps where:
- In the first step, the sensory device asks for the security key if it does not already have it and subsequently waits until it detects all the time windows of communication, subsequently, when it has the necessary data, it sleeps and wakes up exactly after time T0;
- From time T0, the sensory device listens to sensory devices from L+1 layer for time T1, which are one level further from the concentrator than this sensory device itself, whereby from each sensory device it first verifies the security code and if it is correct it stores the data in memory to transmit it in the next step;
- It subsequently transmits data to the L+1 layer for the time T2A, which is mainly data propagating from the concentrator to the edges of the network;
- In the next step, the transmission to the L-1 layer takes place for the time T2B, when the own data as well as the data from the memory from other sensory devices are being transmitted;
- In the penultimate step, the sensory device listens to the data from the L-1 layer for the time T3, which will be transmitted to the L+1 layer in the next step;
- After this step, the sensory device sleeps for a time T0 in order to save battery power.

6. The method of monitoring regional areal, tree or linear infrastructure according to the claim 5, **characterized in that** the devices included in the proprietary network communicate on communication standards Bluetooth, WiFi, Zigbee, LoRa, Sigfox, RFC or also newly originated protocols in such a way that devices which are in adjacent layers L and L-1 use the same communication protocol.
